# DEMANDE DE BREVET EUROPEEN

(11) **EP 1 760 648 A1**
(43) Date de publication de la demande: **07.03.2007**
(21) Numéro de dépôt: 06358012.0
(22) Date de dépôt: 04.07.2006
(51) Int. Cl.: G06Q 10/00

(54) **Article de prise de commande et procédé de prise de commande à l'aide d'un tel article**

(30) Priorité: 05.07.2005 FR 0507152
(71) Demandeur: Groupe Logipro, 84300 Cavaillon (FR)
(72) Inventeur: Michel, Frédéric, 13350 Charleval (FR)
(74) Mandataire: Domange, Maxime

(57) **Abrégé**

La présente invention concerne un article de prise de commande auprès d'un individu parmi une population d'individus déterminée placée sous le contrôle d'une administration, les individus de la population étant identifiés par un code d'identification client enregistré dans une base de donnée exploitée par à un système informatique de traitement, ledit article comprenant:
a) au moins un bon de commande (1) comportant une zone de lecture optique (2) regroupant:
- une zone d'identification (3) dudit individu émetteur comportant des moyens de transcription (4) pour transcrire ledit code d'identification client sous une forme (8) permettant sa lecture optique; et
- une pluralité de zones (5) d'identification des produits commandés par ledit individu, aptes à être remplies à l'aide de moyens d'identification (16) desdits produits; et
- une pluralité de zones de quantification (6), comportant des moyens de transcription (7) pour indiquer le nombre d'unités de chaque produit commandé sous une forme adaptée (8) à sa lecture optique,
- chaque dite zone (5) d'identification des produits étant associée à une dite zone (6); et
b) des moyens d'identification des produits (16) comprenant un code de lecture optique (16a), lesdits moyens d'identification (16) des produits (16) ayant un format adapté à leur insertion par ledit individu émetteur dans lesdites zones (5) d'identification des produits dudit bon de commande (1).

## Description

La présente invention concerne un article de prise de commande ainsi qu'un procédé de prise de commande associé.

L'invention s'applique en particulier à la prise de commande de produits de grande consommation auprès d'individus placés sous le contrôle d'une administration ou d'une structure de gestion, par exemple auprès de détenus dans une prison.

Les prisonniers des centres pénitenciers peuvent en effet commander des produits de grande consommation pour leur usage personnel auprès d'une cantine gérée par l'administration desdits centres ou, de plus en plus fréquemment, par des intervenants extérieurs, généralement spécialistes de la cuisine collective, auxquels la gestion de l'activité cantine est confiée.

Toutefois, les intervenants extérieurs ne sont pas spécialisés dans l'activité cantine et la fourniture de produits de grande consommation tels qu'on les trouve dans les commerces de grande distribution. Ils constituent dès lors généralement un simple intermédiaire entre l'administration pénitentiaire et les centrales d'achats pour l'approvisionnement en produits commandés.

Or, cette tâche de prise et de gestion des commandes des détenus est particulièrement fastidieuse et donc coûteuse, en temps, en moyens humains, et donc en argent pour l'administration ou pour l'intervenant privé.

En effet, il faut régulièrement, en pratique toutes les semaines ou quinzaines, distribuer aux détenus des bons de commandes, sur lesquels lesdits détenus listent manuellement les produits qu'ils souhaitent commander, puis ramasser lesdits bons de commande.

Une fois les bons de commandes ramassés, il faut ensuite réaliser manuellement une saisie informatique de chaque commande afin d'une part, de préparer une commande groupée auprès des fournisseurs, et de vérifier pour chaque détenu, le contenu de sa commande ainsi que le solde de son compte afin de déterminer si ledit détenu peut honorer sa commande ou non, et d'autre part pour réaliser la facturation individuelle de chaque détenu et effectuer un suivi de leurs commandes.

Aussi les opérations de prises de commandes auprès des détenus nécessitent-elles la mobilisation de nombreux personnels pendant une durée importante pour distribuer et ramasser les bons de commande, ainsi que pour la saisie informatique des bons.

En outre, l'édition des bons de commande est longue et coûteuse pour l'administration. Enfin, les bons de commande ayant un format généralement limité à une page recto ou une page recto verso, le nombre de produits proposés aux détenus est très limité par rapport à l'offre existant dans les commerces traditionnels.

On connait bien des systèmes de prise de commande à distance adaptés pour une utilisation par des particuliers. Un exemple de tels systèmes est notamment décrit dans le document US-A-4 654 482, qui présente un terminal électronique de commande directe par lecture optique de codes-barres produits sur des catalogues ou publicités via une ligne téléphonique.

Ce terminal électronique comporte un lecteur de code-barres, un modem pour connecter le terminal à une ligne téléphonique et permettre l'envoi de commandes, des moyens de mise en mémoire et des moyens de contrôle de l'acheminement des commandes vers les marchands.

Le terminal comporte également plusieurs cartouches de données correspondants à différents magasins ou vendeurs agréés auprès desquels l'utilisateur du terminal effectue ses commandes, ces cartouches contenant les données nécessaires pour passer commande de façon sécurisée auprès d'un magasin donné.

Un tel système de commande, s'il peut simplement être employé chez des particuliers, est parfaitement inapproprié pour les opérations de prises de commande de détenus en milieux carcéral. En effet, il est inenvisageable d'installer un terminal de prise de commande relié à une prise téléphonique dans chacune des cellules d'une prison. Il est également inenvisageable de ne prévoir qu'un nombre limité de terminaux en accès libre à tous les détenus car l'administration pénitentiaire doit pouvoir vérifier et contrôler à la fois la fréquence et la nature des commandes de détenus.

Le but de la présente invention est de remédier aux problèmes traditionnellement rencontrés pour l'établissement de commandes de produits par correspondance, et notamment pour la prise de telles commandes auprès des populations carcérales, en particulier en proposant un outil de prise de commande qui permettent de simplifier l'ensemble des opérations relatives à la prise de commande, que ce soit pour les individus émetteurs de dites commandes ou pour les personnels en charge du traitement de ces commandes, en particulier dans les prisons.

Le but de la présente invention est également de fournir un procédé de prise de commande permettant plus généralement, grâce à l'utilisation de l'outil de prise de commande selon l'invention, aux administrations gérant des populations d'individus (prisons, communautés, maisons de repos ou de retraite) auprès desquels des commandes de produits de grande consommation doivent être prises de s'affranchir, au moins partiellement, des opérations de distribution des bons de commande et de saisie manuelle de ces bons.

Un autre but de la présente invention est de proposer un procédé de prise de commande permettant d'automatiser le traitement des commandes ainsi que la facturation individuelle des individus ayant passé commande en fonction de leurs fonds disponibles, le tout sans saisie manuelle du contenu des commandes.

L'invention atteint ses différents buts grâce à un article de prise de commande auprès d'un individu émetteur parmi une population d'individus déterminée, le cas échéant placée sous le contrôle et la surveillance d'une administration ou d'une institution, lesdits individus de ladite population étant identifiés et identifiables au sein de ladite population par un code d'identification client numérique ou alphanumérique, de préférence enregistré dans une base de donnée exploitée par à un système informatique de traitement, ledit article comprenant:
a) au moins un bon de commande comportant une zone de lecture optique regroupant:
   - une zone d'identification dudit individu émetteur comportant des moyens de transcription aptes à être transformés pour transcrire ledit code d'identification numérique ou alphanumérique sous une forme permettant sa lecture optique; et
   - une pluralité de zones d'identification des produits commandés par ledit individu aptes à être remplies par ledit individu à l'aide de moyens d'identification desdits produits; et
   - une pluralité de zones de quantification, comportant des moyens de transcription aptes à être transformés par ledit individu émetteur pour indiquer le nombre d'unités de chaque produit commandé sous une forme adaptée à sa lecture optique,
   - chaque dite zone d'identification des produits étant associée à une dite zone de quantification; et
b) des moyens d'identification des produits aptes à être commandés par ledit individu, comprenant un code de lecture optique, de préférence associé à un code numérique ou alphanumérique d'identification dudit produit, lesdits moyens d'identification des produits ayant un format adapté à leur insertion par ledit individu émetteur dans lesdites zones d'identification des produits sur le bon de commande pour permettre la lecture optique de ce dernier par un dispositif de lecture optique approprié relié au dit système informatique de traitement et à ladite base de donnée.

L'article de prise de commande selon l'invention est particulièrement avantageux en ce qu'il permet à chaque individu en sa possession de s'identifier et de passer commande de un ou plusieurs produits par des moyens de transcription et/ou d'identification permettant une lecture optique du bon de commande, par exemple à l'aide d'un scanner prévu à cet effet, ceci autorisant une lecture directe des bons de commande par l'intermédiaire dudit scanner relié à un ordinateur et l'extraction automatique par reconnaissance optique des informations relatives à l'individu émetteur de la commande et au contenu de celle-ci, supprimant ainsi les opérations de saisie manuelle des bons de commande par les personnels traitant ladite commande, lesdites informations pouvant ensuite être triées et enregistrée dans une base de donnée "client".

Selon d'autres caractéristiques préférées de l'article de commande de l'invention:
- lesdits moyens de transcription de ladite zone d'identification de l'individu émetteur et desdites zones de quantification du nombre d'unités de chaque produit commandé présentes sur ledit bon de commande comportent chacune une pluralité de premiers emplacements délimités tels que des cases à noircir ou à percer, chaque dit emplacement correspondant à un caractère numérique ou alphanumérique déterminé, de préférence indiqué sur ou à côté dudit emplacement;
- le positionnement relatif desdites zones d'identification des produits et desdites zones de quantification est tel qu'il permet, pour chaque produit identifié par un moyen d'identification approprié dans une dite zone d'identification des produits, une lecture optique consécutive ou simultané du produit et du nombre d'unités de ce produit commandé par l'individu émetteur;
- ledit bon de commande comporte également une zone d'authentification, et de préférence une ou plusieurs zones vides de renseignement de l'identité civile et de l'adresse dudit individu ainsi que de la date de commande;
- lesdits moyens d'identification des produits aptes à être commandés par ledit individu sont des étiquettes autocollantes revêtues d'un code-barres, et de préférence d'une référence numérique ou alphanumérique et de préférence encore du nom du produit correspondant audit code-barres et ladite référence numérique ou alphanumérique, lesdites zones d'identification des produits du bon de commande étant des seconds emplacements délimités destinés à recevoir lesdites étiquettes;
- lesdites étiquettes sont groupées sous forme de planches d'étiquettes pré-découpées à décoller, chaque dite planche pouvant comporter des étiquettes correspondant à un ou plusieurs produits, le dit bon de commande comportant également dans chaque dite zone de quantification un dit premier emplacement apte à être transformé par ledit individu émetteur pour indiquer, sous une forme permettant une lecture optique, qu'il souhaite commander de nouvelles étiquettes d'un produit.

L'article de commande selon l'invention peut également avantageusement comporter un catalogue dans lequel sont présentés des produits pouvant être commandés par les individus émetteurs.

La présente invention a également pour objet un procédé de prise de commande auprès d'individus appartenant une population d'individus déterminée, placée sous le contrôle d'une administration ou d'une institution, selon lequel :
a) on attribue à chaque individu de la population, de façon arbitraire ou aléatoire, un code d'identification client numérique ou alphanumérique;
b) on enregistre chaque individu et son dit code d'identification client dans une base de donnée, de préférence exploitée par un système informatique de traitement;
c) on remet à chaque individu au moins un article de prise de commande tel que décrit précédemment, de préférence comportant un catalogue présentant des produits pouvant être commandés, chaque produit étant associé à une référence produit numérique ou alphanumérique et à un prix de vente ;
d) chaque dit individu établit une commande de produits à l'aide d'un bon de commande et des moyens d'identification des produits dudit article de prise de commande qui lui a été remis;
e) on collecte les bons de commandes desdits individus;
f) on traite lesdits bons de commande collectés à l'aide d'un dispositif de lecture optique relié de préférence audit système informatique de traitement afin de recueillir sans saisie manuelle, et pour chaque bon de commande traité, les différentes informations relatives à l'individu émetteur et au contenu de sa commande et les enregistrer dans ladite base de donnée.

Pour établir sa commande, chaque dit individu doit de préférence successivement à l'étape d):
- transcrire son dit code d'identification dans ladite zone d'identification par transformation desdits moyens prévus à cet effet, de préférence par noircissement ou percement desdits premiers emplacements;
- identifier le(s) produit(s) commandé(s) par remplissage d'au moins une dite zone d'identification de produit à l'aide d'un dit moyen d'identification de produit correspondant, tel qu'une étiquette autocollante revêtue d'un code-barres;
- indiquer, pour chaque produit identifié, le nombre d'unités de ce produit désirées par transformation des moyens de transcription situés dans la zone de quantification associée à chaque dite zone d'identification de produit remplie.

Le procédé de l'invention prévoit également, à des fins de vérifications, que ledit individu doit également renseigner le bon de commande, de préférence de façon manuscrite, de son identité civile et son adresse, ainsi que la date de commande dans une ou plusieurs zones vides de renseignement, et authentifier de sa signature le bon de commande dans une zone d'authentification prévue à cet effet sur le bon de commande.

Afin de faciliter la préparation de colis de livraison de commandes individuels pour chaque individu émetteur, on attribue un numéro de commande à chaque bon de commande lu par ledit dispositif de lecture optique à l'étape f), ledit numéro de commande étant associé à la préparation d'un dit colis individuel comportant l'intégralité des produits commandés et à l'établissement automatique d'une facture pour chaque individu émetteur d'une commande.

En outre, à l'étape f), on lit simultanément les informations situées dans la zone d'identification de l'individu, dans les zones d'identification des produits et dans les zones de quantifications du nombre d'unités de produit commandées associées audite zones d'identifications des produits, ce qui confère une grande rapidité de lecture et de traitement des bons de commandes.

L'utilisation de l'article et du procédé de prise de commande selon l'invention permet notamment, dans un exemple particulier d'utilisation, de recueillir de manière simple, rapide et fiable des commandes de produits auprès de détenus parmi la population carcérale d'un établissement pénitentiaire, la lecture automatisée des bons de commande permettant alors avantageusement à l'administration pénitentiaire en charge desdits détenus de recueillir sans saisie manuelle les informations relatives à la commande et à la qualité des détenus ayant émis un bon de commande afin de:
- vérifier si les ressources individuelles des détenus sont suffisantes pour honorer leur commande;
- vérifier la nature des produits commandés par les détenus, et le cas échéant empêcher la livraison d'un ou plusieurs articles commandés;
- vérifier la disponibilité des produits commandés et le cas échéant en effectuer la commande auprès de fournisseurs;
- établir et mettre à jour de façon automatique un historique de commande des détenus.

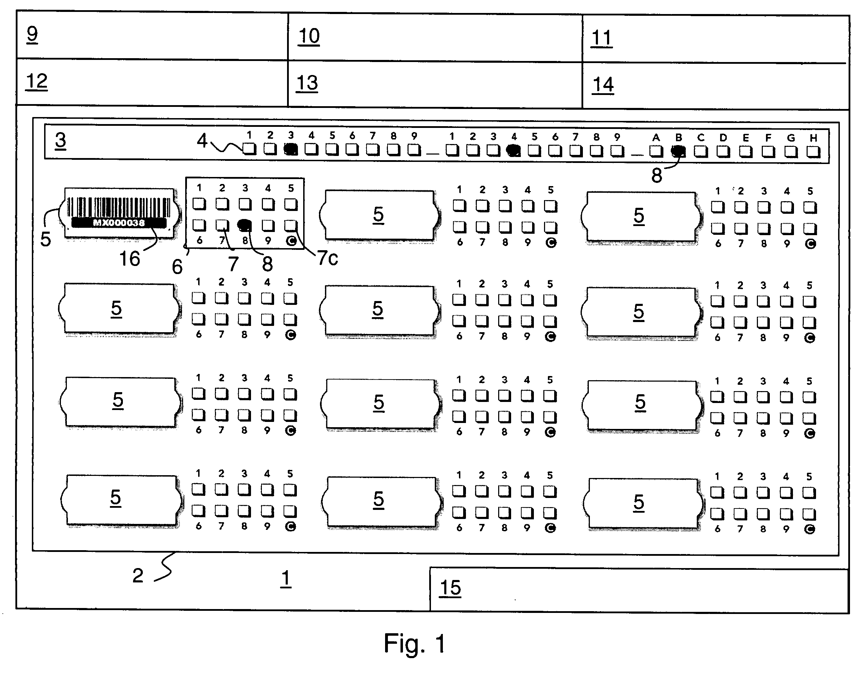

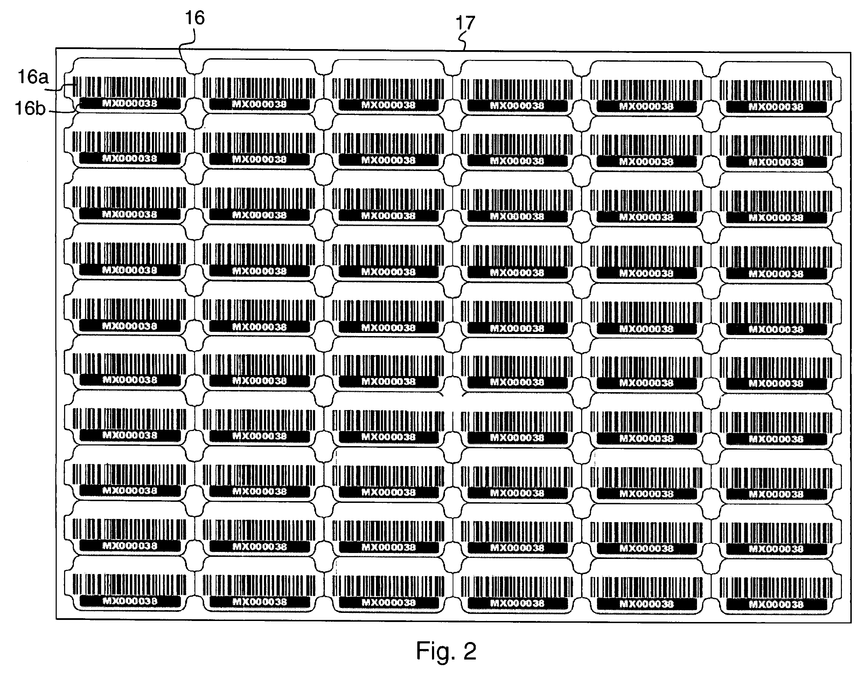

D'autres caractéristiques et avantages de la présente invention apparaîtront à la lumière de la description qui va suivre, faite en référence aux figures 1 et 2 dans lesquelles:
la figure 1 représente un bon de commande tel que compris dans l'article de commande selon l'invention,
la figure 2 représente une planche d'étiquette d'identification de produits pour passer commande à l'aide du bon de commande de la figure 1.

La présente invention propose un article et un procédé destinés notamment aux administrations pénitentiaires ayant la charge d'une population carcérale plus ou moins importante dans une prison et à laquelle une cantine d'approvisionnement en produits de grande consommation, tels que boissons, nourriture ou produits d'hygiène, est traditionnellement proposée.

L'invention vise, en particulier, à fournir un outil et un procédé de prise de commande qui simplifient la gestion et l'exploitation de l'activité cantine auprès des détenus, notamment la collecte et le traitement des bons de commande remplis régulièrement par les détenus.

Selon un premier objet, l'invention propose un article de prise de commande constitué essentiellement d'au moins un bon de commande 1 et de moyens d'identification des produits aptes à être commandés par un individu, ces moyens d'identification étant avantageusement constitués d'étiquettes autocollantes 16, telles que représentées à la figure 2, comportant un code-barres 16a d'identification d'un produit déterminé, associé à un code numérique ou alphanumérique 16b constituant la référence dudit produit.

Le bon de commande 1 est constitué d'une feuille sur laquelle est délimitée une pluralité de zones (2, 3, 5, 6, 9, 10, 11, 12, 13, 14, 15) à remplir par l'individu émetteur d'une commande. Ledit bon de commande 1 comporte notamment une zone de lecture optique 2 à l'intérieur de laquelle est définie une zone 3 d'identification dudit individu émetteur comportant un ensemble de cases à cocher, noircir ou percer, constituant des moyens de transcription 4 aptes à être transformés par l'individu émetteur de la commande, pour indiquer sur ledit bon de commande 1 un code d'identification client personnel, code qui lui est attribué lors de la remise de l'article de commande selon l'invention.

Ladite zone de lecture optique 2 du bon de commande 1 comporte également une pluralité de zones 5 d'identification des produits, de format similaire à celui des étiquettes 16 d'identification des produits, pour que ledit individu émetteur y colle une dite étiquette 16 munie de son code-barres 16a pour spécifier sur le bon de commande 1 un produit qu'il souhaite commander.

En regard de chacune desdites zones 5 d'identification des produits, se trouve également une zone 6 de quantification du nombre d'unités de produit commandé comportant, comme la zone 3 d'identification de l'individu émetteur, une pluralité de cases 7 à cocher, noircir ou percer, en pratique neuf cases correspondant chacune à un nombre d'unités de produit allant de un à neuf, une dixième case 7c permettant à l'individu d'indiquer, en la cochant, la noircissant ou la perçant, qu'il souhaite commander des étiquettes correspondant au produit dont l'étiquette 16 est placée dans la zone 5 d'identification en regard.

Dans l'exemple représenté à la figure 1, la zone de lecture optique 2 du bon de commande 1 comporte douze zones 5 d'identification des produits commandés, associées à douze zones 6 de quantification du nombre d'unités de produit commandé. Toutefois, le nombre desdites zones d'identification de produit et dites zones de quantification pourra varier en fonction des besoins de chaque individu passant commande et/ou des desiderata des administrations ayant la charge desdits individus et de la gestion de leurs commandes.

Le bon de commande 1 comporte également des zones 9, 10, 11, 12, 13, 14, permettant à l'individu émetteur de la commande, d'inscrire manuellement ses patronymes et adresse personnels, ainsi que la date de sa commande. Dans le cas d'un détenu d'un centre pénitentiaire, celui-ci inscrira dans ces zones 9, 10, 11, 12, 13, 14 son nom, son prénom, son numéro d'écrou, son numéro de cellule et son bâtiment, la date de commande étant inscrite dans la case vide restante. Ces éléments inscrits manuellement, ainsi que la date de commande, permettent à l'administration de vérifier, le cas échéant, la correspondance de l'identité indiquée dans les cases 9, 10, 11, 12, 13 et 14, avec le code d'identification client alphanumérique indiqué dans la zone 3 d'identification 3 du bon de commande 1.

Enfin, ledit bon de commande 1 comporte également une zone d'authentification 15, dans laquelle l'individu passant commande, identifié dans la zone 3 par son code d'identification numérique ou alphanumérique et dans les cases 9, 10, 11, 12, 13, 14, doit signer le bon de commande pour valider sa commande.

Comme indiqué précédemment, l'article de prise de commande selon l'invention comporte également des moyens d'identification des produits, aptes à être commandés, constitués d'étiquettes 16 telles que représentées à la figure 2. Ces étiquettes 16 sont avantageusement fournies sous la forme de planche d'étiquettes 17, d'un format semblable au format des bons de commande 1, lesdites étiquettes 16 étant prédécoupées pour faciliter leur séparation et/ou décollage de ladite planche 17. Ces planches d'étiquettes 17 peuvent comporter uniquement des étiquettes correspondant à un seul produit ou des étiquettes correspondant à une pluralité de produits.

Selon un mode de réalisation préféré, l'article de commande selon l'invention comporte également un catalogue (non représenté) de présentation des produits pouvant être commandés par les individus auxquels est remis ledit article de prise de commande. Dans ce catalogue les produits sont classés par catégorie et identifiés par une référence numérique ou alphanumérique identique aux références 16b indiquées sur les étiquettes 16 servant à remplir le bon de commande 1 de l'article de prise de commande selon l'invention.

De préférence, lorsque l'article de prise de commande selon l'invention comporte un dit catalogue, lesdits bons de commande 1 et dites planches d'étiquettes 17 permettant la prise de commande sont avantageusement inclus dans ledit catalogue, à la fin de celui-ci, de telle sorte que lesdits individus émetteurs de commande, bénéficient en un seul objet de l'ensemble des éléments leur permettant d'effectuer leur choix de produits et de préparer leur commande de façon simple, rapide et organisée

De façon avantageuse, ledit catalogue se présente sous la forme d'un classeur comportant un sommaire précisant chaque catégorie ou famille de produits proposés dans ledit catalogue, lesdites familles ou catégories de produits étant repérées par une couleur particulière simplifiant le repérage des produits dans le catalogue, chaque catégorie de produits étant aisément atteignable dans le catalogue par l'intermédiaire d'un onglet de couleur correspondant. Dans chaque catégorie répertoriée, les produits proposés sont listés avec un descriptif de chacun d'eux, leurs prix unitaires, ainsi qu'un numéro spécifiant la planche d'étiquettes 17 correspondant auxdits produits.

L'article de prise de commande tel que décrit précédemment, s'applique en particulier à la gestion et l'exploitation d'une cantine d'approvisionnement pour détenus en milieu carcéral, où son utilisation s'avère particulièrement avantageuse pour l'administration pénitentiaire par rapport aux procédés de prise de commande existants.

Dans chaque prison, les détenus se voient traditionnellement attribuer, lors de leur incarcération, un numéro d'écrou qui constitue avec leurs noms, prénoms, numéros de cellule et de bâtiment, l'identité du détenu parmi l'ensemble de la population carcérale de l'établissement pénitencier considéré.

Lors de leur incarcération ou bien lorsqu'ils émettent le souhait de pouvoir commander des produits auprès de l'administration pénitentiaire, chaque détenu se voit attribuer par ladite administration pénitentiaire un code d'identification client numérique ou alphanumérique, établi de façon arbitraire ou aléatoire par ladite administration, laquelle enregistre ledit code d'identification dans une base de donnée dans laquelle sont également enregistrés les noms, prénoms, numéros d'écrou, numéros de cellule et de bâtiment dudit détenu, ainsi que le montant du solde financier disponible pour ledit détenu.

Une fois le code d'identification client attribué et enregistré par l'administration pénitentiaire, on remet à chaque détenu un article de prise de commande selon l'invention, comportant un catalogue de présentation des produits, des bons de commande 1, et des planches d'étiquettes d'identification des produits 17. En pratique, l'article de prise de commande selon l'invention comporte autant de bons de commande 1 que l'administration pénitentiaire autorise annuellement de commandes à chaque détenu dont elle a la charge, et autant d'étiquettes 16 de chaque produit pouvant être commandé qu'il en est commandé en moyenne annuellement par l'ensemble des détenus.

Par la suite, lorsqu'ils souhaitent passer une commande de produits, les détenus remplissent un bon de commande 1 à l'aide des étiquettes autocollantes 16 regroupées sur les planches d'étiquettes 17 à la fin du catalogue qui leurs ont été remis. Pour ce faire, lesdits détenus consultent le sommaire du catalogue pour y repérer la catégorie ou famille de produit qui les intéresse, puis consultent, dans le catalogue, la liste des produits proposés dans cette catégorie pour y faire leur choix.

Une fois ce choix effectué, les détenus repèrent, en regard du produit choisi, le numéro de planche d'étiquettes correspondant à ce produit, et s'y reportent à la fin du catalogue pour saisir une étiquette et la coller dans une des zones d'identification des produits 5 d'un bon de commande 1 à la fin du catalogue, sur lequel ils auront, au préalable, indiqué leur nom, prénom, numéro d'écrou, numéros de cellule et de bâtiment, dans les cases 9 à 13 dudit bon de commande 1, ainsi que transcrit leur code d'identification client numérique ou alphanumérique dans les cases à cocher 4 de la zone 3 d'identification du bon de commande.

Une fois que les dits détenus ont choisi les produits qu'ils souhaitent commander et collé les étiquettes 16 correspondantes dans les zones 5 du bon de commande, ceux-ci indiquent, en regard de chaque dite étiquette 16 d'identification des produits, dans la zone 6 de quantification correspondante, le nombre d'unités de ce produit qu'ils souhaitent en noircissant ou cochant une des cases 7 de ladite zone de quantification. Lorsque la zone de quantification 6, située en regard de chaque étiquette 16 collée dans une zone 5, est complétée, les détenus datent leur commande dans la case 14, prévue à cet effet, et authentifient et valident leur commande en signant le bon de commande dans la case d'authentification 15 prévue à cet effet.

Les bons de commande 1 complétés par les détenus sont ensuite collectés par l'administration pénitentiaire, puis elle traite lesdits bons de commande collectés à l'aide d'un scanner optique comportant ou relié à un ordinateur ou un système informatique dans lequel un logiciel d'acquisition adapté est installé, ledit scanner effectuant une lecture automatique des bons de commande préalablement disposés dans un chargeur prévu à cet effet.

Ledit scanner et son logiciel d'acquisition existent couramment dans le commerce sous forme de solutions d'exploitation clé en main telles que proposées par la société NOVADYS International, qui incluent les suites de capture et reconnaissance de documents FormReader® et FineReader® développées par ABBYY® Software House. Ils permettent une lecture automatique de la zone de lecture optique 2 de chaque bon de commande 1 et la reconnaissance du code d'identification client transcris dans la zone 3 d'identification du détenu, des code-barres 16a sur les étiquettes 16 dans les zones 5 d'identification des produits, ainsi que le nombre de produits commandés transcris dans les cases 7 des zones 6 de quantifications. Ainsi, lors du passage d'un bon de commande, le scanner et le logiciel d'acquisition permettent de reconnaître automatiquement l'identité du détenu ayant passé commande par son code d'identification, ainsi que le contenu exact de sa commande.

Une fois ces informations extraites, celles-ci sont enregistrées automatiquement dans la base de données client enregistrée dans le système informatique de traitement sous un numéro de commande attribué automatiquement par le logiciel d'acquisition lors de la lecture d'un bon de commande. Lorsque tous les bons de commande ont été scannés et les informations contenues sur ceux-ci enregistrées, l'administration pénitentiaire peut ensuite, aisément, procéder à la commande groupée des différents produits commandés par l'ensemble des détenus ayant passé commande, mais également, pour chaque commande individuelle, vérifier avant émission de la commande vers les fournisseurs que le solde disponible sur le compte de chaque détenu est suffisant pour honorer le montant de la commande qu'il a passé, puis facturer et débiter automatiquement chaque détenu ayant passé commande.

Une fois les commandes préparées, celles-ci sont livrées sous la forme d'un colis individuel à chaque détenu avec la facture correspondante, indiquant le numéro de commande attribué lors de la lecture optique des bons de commande, et le contenu exact de la commande livrée.

Ainsi l'article et le procédé de prise de commande selon l'invention permettent de supprimer toutes les étapes de saisie manuelle des bons de commande par l'administration préalablement à l'émission desdites commandes auprès des fournisseurs, ce qui confère un gain de temps considérable dans le traitement des commandes par rapport au procédé de prise de commande traditionnel.

En outre, l'article de prise de commande comportant un catalogue présentant tous les produits pouvant être commandés, des bons de commande et des planches d'étiquettes d'identification des produits en nombre suffisant pour passer des commandes pendant un an, celui-ci permet avantageusement à l'administration de supprimer les opérations de distribution régulière de bons de commande aux détenus, ainsi que l'édition de ces bons de commande, ce qui, là encore, permet de gagner du temps et de diminuer les coûts relatifs à l'exploitation d'une cantine en milieu carcéral.

L'article et le procédé de prise de commande selon l'invention sont également particulièrement avantageux en ce qu'ils sont parfaitement adaptés à une complète externalisation de l'activité cantine dans les prisons auprès de prestataires de services qui peuvent gérer de façon autonome l'approvisionnement auprès de fournisseurs et la délivrance des commandes auprès des détenus pour le compte de l'administration pénitentiaire, cette dernière rétribuant directement le prestataire de services, lequel produit à ladite administration des relevés réguliers relatant le nombre et le contenu des commandes pour chaque détenu.

## Revendications

1. Article de prise de commande auprès d'un individu émetteur parmi une population d'individus déterminée, le cas échéant placée sous le contrôle et la surveillance d'une administration ou d'une institution, lesdits individus de ladite population étant identifiés et identifiables au sein de ladite population par un code d'identification client numérique ou alphanumérique, de préférence enregistré dans une base de donnée exploitée par à un système informatique de traitement, ledit article comprenant:
a) au moins un bon de commande (1) comportant une zone de lecture optique (2) regroupant:
- une zone d'identification (3) dudit individu émetteur comportant des moyens de transcription (4) aptes à être transformés par l'individu émetteur de la commande pour transcrire ledit code d'identification client sous une forme (8) permettant sa lecture optique; et
- une pluralité de zones (5) d'identification des produits commandés par ledit individu, aptes à être remplies par ledit individu à l'aide de moyens d'identification (16) desdits produits; et
- une pluralité de zones de quantification (6), comportant des moyens de transcription (7) aptes à être transformés par ledit individu pour indiquer le nombre d'unités de chaque produit commandé sous une forme adaptée (8) à sa lecture optique,
- chaque dite zone (5) d'identification des produits étant associée à une dite zone (6); et
b) des moyens d'identification des produits (16) aptes à être commandés par ledit individu, comprenant un code de lecture optique (16a), de préférence associé à un code numérique ou alphanumérique (16b) d'identification dudit produit, lesdits moyens d'identification (16) des produits (16) ayant un format adapté à leur insertion par ledit individu émetteur dans lesdites zones (5) d'identification des produits dudit bon de commande (1).

2. Article de prise de commande selon la revendication 1, **caractérisé en ce que** lesdits moyens de transcription de ladite zone (3) d'identification dudit individu et desdites zones (6) de quantification du nombre d'unités de chaque produit commandé présentes sur ledit bon de commande comportent chacune une pluralité de premiers emplacements délimités (4, 7) tels que des cases à cocher, noircir ou percer, chaque dit emplacement (4, 7) correspondant à un caractère numérique ou alphanumérique déterminé, de préférence indiqué sur ou à côté dudit emplacement.

3. Article de prise de commande selon la revendication 1 ou 2, **caractérisé en ce que** le positionnement relatif desdites zones (5) d'identification des produits et desdites zones (6) de quantification est tel qu'il permet, pour chaque produit identifié par un dit moyen d'identification (16) dans une dite zone (5) d'identification des produits, une lecture optique consécutive ou simultané du produit et du nombre d'unités de ce produit commandé par l'individu émetteur.

4. Article de prise de commande selon l'une des revendications 1 à 3, **caractérisé en ce que** ledit bon de commande comporte également une zone d'authentification (15), et de préférence une ou plusieurs zones vides (9, 10, 11, 12, 13, 14) de renseignement de l'identité civile et de l'adresse dudit individu ainsi que de la date de commande.

5. Article de prise de commande selon l'une des revendications 1 à 4, **caractérisé en ce que** lesdits moyens d'identification des produits aptes à être commandés par ledit individu sont des étiquettes autocollantes (16) revêtues d'un code-barres (16a), et de préférence d'une référence numérique ou alphanumérique (16b), et de préférence encore du nom du produit correspondant audit code-barres et ladite référence numérique ou alphanumérique, lesdites zones d'identification des produits du bon de commande étant des seconds emplacements (5) délimités destinés à recevoir lesdites étiquettes.

6. Article de prise de commande selon la revendication 5, **caractérisé en ce que** lesdites étiquettes (16) sont présentées sous forme de planches (17) d'étiquettes pré-découpées, chaque dite planche pouvant comporter des étiquettes correspondant à un ou plusieurs produits, le dit bon de commande (1) comportant également dans chaque dite zones (6) de quantification un dit premier emplacement de commande (7c) apte à être transformé par ledit individu émetteur pour indiquer, sous une forme (8) permettant une lecture optique, qu'il souhaite commander de nouvelles étiquettes (16) d'un produit.

7. Article de prise de commande selon l'une des revendications 1 à 6, **caractérisé en ce qu'**il comporte également un catalogue dans lequel sont présentés des produits pouvant être commandés par lesdits individus, lesdits produits étant classés par catégories et identifiés par une référence numérique ou alphanumérique.

8. Procédé de prise de commande auprès d'individus appartenant une population d'individus déterminée, le cas échéant placée sous le contrôle d'une administration ou d'une institution, selon lequel :
a) on attribue à chaque individu de la population, de façon arbitraire ou aléatoire, un code d'identification numérique ou alphanumérique;
b) on enregistre chaque individu et son dit code d'identification dans une base de donnée, de préférence exploitée par un système informatique de traitement;
c) on remet à chaque individu au moins un article de prise de commande tel que défini selon l'une des revendications 1 à 7, de préférence comportant un catalogue présentant des produits pouvant être commandés, chaque produit étant associé à une référence produit numérique ou alphanumérique et à un prix de vente ;
d) chaque dit individu établit une commande de produits à l'aide d'un bon de commande (1) et des moyens d'identification des produits (16) dudit article de prise de commande qui lui a été remis;
e) on collecte les bons de commandes (1) desdits individus;
f) on traite lesdits bons de commande (1) collectés de manière automatique à l'aide d'un dispositif de lecture optique relié de préférence audit système informatique de traitement afin de recueillir sans saisie manuelle, et pour chaque bon de commande traité, les différentes informations relatives à l'individu émetteur et au contenu de sa commande et les enregistrer dans ladite base de donnée.

9. Procédé selon la revendication 8, **caractérisé en ce qu'**à l'étape d), chaque dit individu doit pour établir sa commande de produits:
- transcrire son dit code d'identification dans ladite zone d'identification (3) par transformation (8) desdits moyens (4)prévus à cet effet, de préférence par noircissement ou percement desdits premiers emplacements;
- identifier le(s) produit(s) commandé(s) par remplissage d'au moins une dite zone (5) d'identification de produit à l'aide d'un dit moyen d'identification (16) de produit correspondant, en particulier une étiquette autocollante revêtue d'un code-barres (16a) ;
- indiquer le nombre d'unités désirées pour chaque produit par transformation (8) des moyens de transcription (7) du nombre d'unités de produits commandés situés dans la zone de quantification (6) associée à chaque dite zone d'identification (5) de produit remplie.

10. Procédé selon la revendication 9, **caractérisé en ce que** ledit individu doit également renseigner le bon de commande (1), de préférence de façon manuscrite, de son identité civile et son adresse, ainsi que la date de commande dans une ou plusieurs zones vides de renseignement (9, 10, 11, 12, 13, 14), et authentifier de sa signature le bon de commande dans une zone d'authentification (15) prévue à cet effet sur le bon de commande (1).

11. Procédé selon l'une des revendications 8 à 10, **caractérisé en ce qu'**on attribue un numéro de commande à chaque bon de commande lu par ledit dispositif de lecture à l'étape f), ledit numéro de commande étant associé à la préparation d'un colis de livraison de commande individuel comportant l'intégralité des produits commandés et à l'établissement automatique d'une facture pour chaque individu ayant émis une commande.

12. Procédé selon l'une des revendications 8 à 10, **caractérisé en ce qu'**à l'étape f), on lit simultanément les informations situées dans la zone (3) d'identification de l'individu, dans les zones (5) d'identification des produits et dans les zones (6) de quantifications du nombre d'unités de produit commandées associées audite zones (5) d'identifications des produits.

13. Utilisation d'un article de prise de commande selon l'une des revendications 1 à 7 pour la prise de commande selon un procédé conforme à l'une des revendications 8 à 12 auprès de détenus parmi la population carcérale d'un établissement pénitentiaire, la lecture automatisée des bons de commande permettant à l'administration pénitentiaire en charge desdits détenus de recueillir sans saisie manuelle les informations relatives à la commande et à la qualité des détenus ayant émis un bon de commande afin de:
- vérifier si les ressources individuelles des détenus sont suffisantes pour honorer leur commande;
- vérifier la nature des produits commandés par les détenus, et le cas échéant empêcher la livraison d'un ou plusieurs articles commandés;
- vérifier la disponibilité des produits commandés et le cas échéant en effectuer la commande auprès de fournisseurs;
- établir et mettre à jour de façon automatique un historique de commande des détenus.
